(19) Europäisches Patentamt
European Patent Office
Office européen des brevets

(11) **EP 2 569 617 B1**

(12) **EUROPÄISCHE PATENTSCHRIFT**

(45) Veröffentlichungstag und Bekanntmachung des Hinweises auf die Patenterteilung:
**07.05.2014 Patentblatt 2014/19**

(21) Anmeldenummer: **11722713.2**

(22) Anmeldetag: **10.05.2011**

(51) Int Cl.:
*G01N 25/50* (2006.01)     *G01N 25/52* (2006.01)
*H05K 9/00* (2006.01)

(86) Internationale Anmeldenummer:
**PCT/AT2011/000220**

(87) Internationale Veröffentlichungsnummer:
**WO 2011/140576 (17.11.2011 Gazette 2011/46)**

(54) **VORRICHTUNG ZUR MESSUNG DES FLAMMPUNKTES VON FLÜSSIGKEITEN UND FESTSTOFFEN**

DEVICE FOR MEASURING THE FLASH POINT OF LIQUIDS AND SOLIDS

DISPOSITIF POUR MESURER LE POINT D'INFLAMMATION DE LIQUIDES ET DE SOLIDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.05.2010 AT 7972010**

(43) Veröffentlichungstag der Anmeldung:
**20.03.2013 Patentblatt 2013/12**

(73) Patentinhaber: **Grabner Instruments Messtechnik GmbH**
**1220 Wien (AT)**

(72) Erfinder:
• **HAAS, Nicolas**
**A-2223 Hohenruppersdorf (AT)**
• **HENSE, Klaus**
**A-2514 Traiskirchen (AT)**

(74) Vertreter: **Keschmann, Marc et al**
**Haffner und Keschmann Patentanwälte GmbH**
**Schottengasse 3a**
**1010 Wien (AT)**

(56) Entgegenhaltungen:
**EP-A1- 0 486 980**

• **"Automated Closed Cup Flash Point Analyzers HFP 36x SERIES", , 1. Januar 2004 (2004-01-01), XP55002874, Gefunden im Internet: URL:http://www.hdscientific.com.au/media/p roducts/ herzog/hfp360.pdf [gefunden am 2011-07-15]**
• **James Colotti: "EMC Design Fundamentals", , 1. Januar 2005 (2005-01-01), XP55002904, Gefunden im Internet: URL:http://www.ieee.li/pdf/ viewgraphs/emc_ design_fundamentals.pdf [gefunden am 2011-07-15]**
• **"EMI, RFI, and Shielding Concepts - MT-095 TUTORIAL", , 1. Januar 2009 (2009-01-01), XP55002897, Gefunden im Internet: URL:http://www.analog.com/static/imported- files/ tutorials/MT-095.pdf [gefunden am 2011-07-15]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur Messung des Flammpunktes von Flüssigkeiten und Feststoffen in einer Messkammer, welche aus einer Messwanne sowie einem Deckel gebildet ist und welche mit Mitteln zum Beheizen der Flüssigkeit bzw. des Feststoffes in der Messwanne, einer eine Funkenstrecke aufweisenden elektrischen Zündung, Temperaturfühler, einer Druckmesseinrichtung sowie einer Anpresseinrichtung zur dichten Verbindung von Messwanne und Deckel versehen ist, wobei weiters eine Steuervorrichtung zum Steuern der Heizmittel, der Zündung und der Anpressvorrichtung und zum Erfassen der Messwerte der Temperaturfühler und der Druckmesseinrichtung vorgesehen ist.

Eine derartige Vorrichtung ist beispielsweise aus der EP 486 980 B1 bekannt geworden. Der Flammpunkt einer Flüssigkeit oder eines Feststoffes wird dabei in einer Weise ermittelt, dass die zu untersuchende Substanz zuerst in eine beheizbare Messkammer gebracht wird, und die zur Bestimmung des Flammpunktes vorzunehmende Feststellung einer Entflammung durch Messung des in der Messkammer nach einem Zünden vorliegenden Druckes erfolgt, der bei einer Entflammung der zu untersuchenden Substanz zur Folge der in der Messkammer durch die Flamme herbeigeführten Temperaturerhöhung ansteigt.

Der Flammpunkt einer Substanz wird bei Transport- und Sicherheitsvorschriften verwendet, um entflammbare und explosive Materialien zu definieren und gibt über das Vorhandensein von leichtflüchtigen und entflammbaren Komponenten in einer schwer flüchtigen und nichtbrennbaren Substanz Auskunft.

Nach ASTM ist der Flammpunkt als die niedrigste Temperatur, korrigiert auf barometrischen Luftdruck von 101,3 kPa definiert, bei welcher sich durch das Anlegen einer Testflamme der Dampf der Probe entflammt, wobei eine Flamme entsteht, welche selbst über die Oberfläche der Probe wandert und mindestens zwei Drittel der Oberfläche bedeckt.

Der Flammpunkt einer Substanz wird unter Laborbedingungen bei Lufteinwirkung ermittelt.

Weltweit gibt es mehrere, von ASTM und ISO anerkannte Messmethoden zur Messung des Flammpunktes. Dabei wird immer ein Probengefäß verwendet, welches mit Flamme oder elektrisch beheizt wird. Das offene Probengefäß ist kaum mehr für Prüfmessungen zulässig, da die leichtflüchtigen Komponenten abdampfen und zur Verbrennung nicht mehr beitragen können.

Bei dem aus der EP 486 980 B1 bekannt gewordenen Verfahren wird so vorgegangen, dass die zu messende Substanz, vorwiegend eine Flüssigkeit, in die Messwanne in einer vorgegebenen Menge eingefüllt wird. Die Messwanne wird entweder manuell oder automatisch mittels einer Anpressvorrichtung an den heizbaren Deckel angedrückt.

Der Messvorgang wird gestartet, indem der Deckel auf eine vorgegebene Temperatur, welche mit Sicherheit unter der erwarteten Flammpunktstemperatur liegt, aufgeheizt wird. Die Überwachung und Messung der Temperatur erfolgt über einen Temperaturfühler.

Durch den Temperaturkontakt der Messwanne mit dem Deckel wird auch diese mit aufgeheizt. Ihre Temperatur bleibt aber unter der Temperatur des Deckels.

Nach einer Wartezeit für den Temperaturangleich der Messwanne an den Deckel wird die Temperatur des Deckels langsam weiter erhöht und in konstanten Temperaturabständen eine Zündung über die Elektroden vorgenommen. Unmittelbar nach der Zündung wird der Druckanstieg über eine Druckmesseinrichtung, welche vorzugsweise als piezoresistiver Druckgeber ausgebildet ist, in der Messkammer gemessen. Die Flammpunkttemperatur gibt ein weiterer Temperaturfühler an. Die Messkammer wird vom Messgefäß bzw. Volumen der zu messenden Substanz und dem freien Raum unter dem Deckel bestimmt.

Um das Verfahren automatisiert durchführen zu können und um genaue und reproduzierbare Messergebnisse zu liefern, muss eine geeignete Steuervorrichtung zum Steuern der Heizmittel, der Zündung und der Anpressvorrichtung sowie zum Erfassen der Messwerte der Temperaturfühler und der Druckmesseinrichtung vorgesehen sein. Derartige Steuereinrichtungen sind meist mit einfachen und robusten Mikrokontrollern oder Mikroprozessoren ausgebildet. Die Einfachheit und Robustheit wird dabei weitestgehend, aber nicht ausschließlich von folgenden Eigenschaften gekennzeichnet:

    1) die Taktfrequenz des Prozessors beträgt 20 MHz oder weniger
    2) die in der Steuereinrichtung verwendeten Bausteine werden mit vergleichsweise hohen Spannungen von typischer Weise 5V oder 3,3 V betrieben und
    3) die Integration der Bausteine ist sehr gering, die Steuerung weist also eine niedrige Anzahl von Si-Halbleitern pro Flächeneinheit auf.

Ein Beispiel eines bisher verwendeten Mikropozessors für eine solche Steuerung ist der H8/510 Mikroprozessor der Fa. Hitachi Semiconductor.

Aufgrund dieser Eigenschaften kann der Programmablauf bei dieser Art der Steuerung allerdings nur in einem limitierten Ausmaß geändert werden, wobei Anpassungen vom Benutzer sehr erschwert oder eingeschränkt sind.

Bei modernen Flammpunktmessgeräten, die für eine Vielzahl unterschiedlicher Flüssigkeiten und Feststoffen zum Einsatz gelangen sollen und die unter den verschiedensten Umgebungsbedingungen zuverlässige und reproduzierbare Messergebnisse liefern sollen, muss der Programmablauf an die jeweiligen Umstände und ggf. sogar von Fall zu Fall angepasst werden und die Steuerung hängt insbesondere von verschiedenen Parametern ab, die ggf. eine entsprechende Benutzereingabe erfordern.

Die hierfür erforderlichen komplexeren Steuerungsaufgaben waren bei Flammpunktmessgeräten nur mit Hilfe eines externen Bedien- und Steuerungscomputers bewältigbar. Der Anschluss solcher externer Bedien- und Steuerungscomputer erfolgte zwar in der Regel über standardisierte Schnittstellen, sodass herkömmliche Computer (PCs) zum Einsatz gelangen konnten. Dennoch ist die Verwendung eines externen Steuerungs-und Bediencomputers mit erheblichen Nachteilen verbunden, da der Einsatz des Flammpunktmessgerätes immer vom Standort des jeweiligen externen Steuerungs- und Bediencomputers abhängig war. Die Verwendung einer externen Steuerung hat allerdings den Vorteil, dass die hohen Temperaturen, die im Bereich der Zündquelle des Flammpunktmessgerätes vorherrschen und insbesondere auch das starke elektromagnetische Feld, das von der Zündquelle ausgeht, aufgrund der externen Anordnung keine negativen Einflüsse auf die Steuervorrichtung ausüben, sodass eine derartige externe Steuerung als besonders störungs- und absturzsicher gilt.

Die vorliegende Erfindung zielt nun darauf ab, ein Flammpunktmessgerät der eingangs genannten Art dahingehend weiterzubilden, dass auf eine externe Steuerung verzichtet werden kann, wobei gleichzeitig die Bedienungsfreundlichkeit erhöht werden soll. Dies soll gelingen ohne die Baugröße des Flammpunktmessgerätes und die Störungsanfälligkeit wesentlich zu erhöhen. Gleichzeitig sollen auch komplexere Steueraufgaben bewältigt werden können und insbesondere eine flexible Anpassung des Programmablaufs möglich sein sowie die Möglichkeit gewährleistet sein, die Komponenten der Steuerungen in einfacher Art und Weise austauschen zu können.

Zur Lösung dieser Aufgabe ist die Vorrichtung der eingangs genannten Art derart weitergebildet, dass die Steuervorrichtung von einem als eingebettetes System ausgebildeten Rechner, insbesondere einem Embedded PC gebildet ist, der über eine Schnittstellenvorrichtung an die Heizmittel, die Zündung, die Anpressvorrichtung, die Temperaturfühler und die Druckmesseinrichtung angeschlossen ist, und dass die Messkammer und die Steuervorrichtung in einem gemeinsamen Gehäuse angeordnet sind. Durch die Verwendung eines als eingebettetes System ausgebildeten Rechners, insbesondere eines Embedded PCs, wird die Möglichkeit einer Platz sparenden Anordnung der Steuerung im Gehäuse des Flammpunktmessgerätes geschaffen, wobei auf bewährte und standardisierte Komponenten zurückgegriffen werden kann. Dadurch, dass das eingebettete System über eine Schnittstellenvorrichtung an die Heizmittel, die Zündung, die Anpressvorrichtung, die Temperaturfühler und die Druckmesseinrichtung angeschlossen ist, wird ein einfacher Austausch der Steuerung ermöglicht, da das eingebettete System, das in der Regel auf einer einzigen Leiterplatte Platz findet, lediglich mit der Schnittstellenvorrichtung verbunden werden muss. Das eingebettete System ist dabei bevorzugt lösbar in der Schnittstellenvorrichtung aufgenommen und beispielsweise dadurch gekennzeichnet, dass eine Stecker- oder Kontaktleiste in eine entsprechende Aufnahme der Schnittstellenvorrichtung mit Gegenkontakten bzw. Gegensteckern eingesteckt werden kann. Die Schnittstellenvorrichtung kann beispielsweise die Treiberbausteine und die Software zur Ansteuerung der einzelnen Hardwarekomponenten des Flammpunktmessgerätes beinhalten. Insgesamt wird somit eine modulare Architektur geschaffen, bei der die einzelnen Komponenten und insbesondere das eingebettete System in einfacher Art und Weise ausgetauscht werden kann, was vor allem für Upgrades sinnvoll ist. Außerdem kann durch die Verwendung standardisierter Komponenten die Produktion und Entwicklung dieser Komponenten leicht durch Dritte erledigt werden.

Als eingebettetes System wird im Rahmen der Erfindung ein elektronischer Rechner oder auch Computer verstanden, der in einen technischen Kontext eingebunden ist. Das eingebettete System kann dabei auf ähnliche Hardware wie Arbeitsplatzcomputer basieren, sodass die Programmierung unter Verwendung gewohnter und erprobter Entwicklungsumgebungen erfolgen kann. Embedded PCs weisen in der Regel sogar gänzlich eine Standard-PC-Architektur auf, wobei die allgemeine Verfügbarkeit entsprechender PC-Software und von Entwicklungsumgebungen genutzt werden kann. Die Elektronik eines eingebetteten Systems wird meist von einem Mikroprozessor mit entsprechender Peripherie oder von einem Mikrokontroller gebildet. Eingebettete Systeme sind besonders kostengünstig und können auf kleinstem Raum montiert werden. Eingebettete Systeme bestehen in der Regel aus einem CPU-Grundmodul mit Netzteil, Systemschnittstellen wie beispielsweise RS232, USB oder Ethernet, einer Busklemme sowie einem Embedded PC-Betriebssystem.

Die Grenze zwischen einem leistungsstarken eingebetteten System und einem embedded PC werden dabei zunehmend unschärfer, da am Markt bereits zahlreiche Komponenten verfügbar sind, welche nicht unmittelbar als klassische PC-Konfiguration angesehen werden können, da bereits einige Schnittstellen zur Steuerung von Peripheriegeräten vorgesehen sind, welche in einem Arbeitsplatzrechner keine Verwendung finden. Dennoch ist die Leistungsfähigkeit solcher Komponenten mit denen eines PC durchaus vergleichbar. Zudem ist die Programmierung dieser Komponenten aufgrund des verwendeten embedded PC Betriebssystems in der gewohnten PC Umgebung möglich. Durch die gesteigerte Leistung dieser eingebetteten Systeme und embedded PCs ist deren Störanfälligkeit (höhere Taktfrequenz, geringere Spannung, höhere Integration) deutlich erhöht. Als eingebettetes System im Sinne der vorliegenden Erfindung werden daher bevorzugt eingebettete Systeme angesehen, deren Rechnerleistung mit denen eines konventionellen PC verglichen werden können. Insbesondere sind dies Systeme, welche eine Taktfrequenz von mehr als 100 MHz oder eine Versorgungsspannung von weniger als 3,3 V oder eine hohe Integration der Bauteile (z.B. ARM 9, XSCALE oder vergleichbar bzw. leistungsstärker) oder ein einem embedded PC-Betriebssystem verwandtes Betriebssystem aufweisen.

Da die erfindungsgemäße Flammpunktmessvorrichtung ohne externe Steuervorrichtung auskommt, ist es vorteilhaft, wenn auch die für den Betrieb erforderlichen Benutzereingaben direkt am Flammpunktmessgerät vorgenommen werden können. Die Erfindung sieht in diesem Zusammenhang bevorzugt vor, dass der Rechner mit Hilfe einer berührungsempfindlichen Anzeigevorrichtung, insbesondere Bildschirm bedienbar ist. Ein derartiger berührungsempfindlicher Bildschirm bietet verbesserte Anzeigemöglichkeiten und einen erhöhten Bedienungskomfort. Aufgrund der starken elektromagnetischen Felder, die von der im Gerät angeordneten Zündquelle ausgehen, sollten jedoch Vorkehrungen getroffen werden, um Störungen der Anzeige zu vermeiden. Eine bevorzugte Ausbildung sieht in diesem Zusammenhang vor, dass die elektrische Verbindung der Anzeigevorrichtung mit dem Rechner als analoge Verbindung ausgebildet ist. Es hat sich nämlich gezeigt, dass digitale Verbindungen, wie beispielsweise HDMI, während des Zündens einen Ausfall der Kommunikation zeigen. Aufgrund des vorgesehenen digitalen Protokolls dauert eine Regeneration der digitalen Verbindung deutlich länger als bei einer analogen Kommunikation, wo ggf. auftretende Störungen für die Zeit der Impulslänge (max. 90 ms) auftreten können, die für das menschliche Auge allerdings nicht wahrnehmbar sind.

In als eingebettete Systeme ausgebildeten Rechnern finden meist Bauteile Verwendung, die gegenüber elektromagnetischen Feldern empfindlich sind. Es ist daher vorgesehen, derartige empfindliche elektronische Bauteile entsprechend zu schützen und abzuschirmen, damit die Betriebssicherheit auch dann gewährleistet ist, wenn der Rechner zur Verringerung der Baugröße des Flammpunktmessgerätes relativ nahe an der Zündquelle angeordnet ist. Die Störungsanfälligkeit der elektronischen Komponenten steigt mit steigender Miniaturisierung überdies stark an, sodass leistungsstärkere Geräte hier deutlicher gefährdet sind als ältere und langsamere Mikrokontroller. Im Rahmen der Erfindung werden unterschiedlichste Maßnahmen vorgeschlagen, um die elektronischen Bauteile des Rechners vor magnetischen Feldern zu schützen, wobei die Maßnahmen sowohl getrennt voneinander zur Anwendung gelangen können als auch gemeinsam.

Bevorzugt ist die Erfindung dahingehend weitergebildet, dass gegenüber elektromagnetischen Feldern empfindliche elektronische Bauteile des Rechners innerhalb eines durch einen unteren und eines oberen Öffnungswinkel begrenzten Bereichs eines Kegels liegen, dessen Achse in der Verlängerung der Funkenstrecke liegt.

Die für die Absturzgefährdung maßgebliche Eigenschaft ist dabei die Energiedichte des abgestrahlten Feldes an der stelle der sensibelsten Komponenten. Als Sensible Komponenten gelten dabei vor allem Analog-Digital-Wandler, Operationsverstärker und jeder Mikrokontroller (CPU). Die abgestrahlte Leistungsdichte $P_A$ kann z.B. mit dem Poynting Vektor berechnet werden, und ist für einen elektrischen Dipol (als welcher der Funke in guter Näherung approximiert werden kann) proportional zu

$$P_A \propto \sin^2(\theta)$$

Eine zusätzliche Reduktion der Leistungsdichte kann durch geeignete Ausrichtung der Leiterplatte erreicht werden, wobei hier das Skalarprodukt des Poynting-Vektors mit der Flächennormalen der Leiterplatte von Bedeutung ist. Die minimale Leistungsdichte wird dabei durch senkrechte Orientierung des Poyntingvektors zur Flächennormale erreicht. Die eingestrahlte Leistungsdichte ergibt sich daher zu

$$P_E = P_A \cos(\theta) \propto \sin^2(\theta)\cos(\theta)$$

Daraus ergeben sich zwei optimale Bereiche (unter der Annahme, dass die Flächennormale der Leiterplatte parallel zur Funkenrichtung steht) in einem kegeligen Bereich von 0°-40° (bevorzugt 0°-20°) sowie 70°-90° (bevorzugt 84°-90°). Steht die Flächennormale senkrecht zur Funkenrichtung liegt der optimale Kegel nur im unteren Winkelbereich von 0°-30; hier ergeben sich aber technische Nachteile aufgrund der deutlich größeren Bauform. Die Rotationsachse des Kegels wird dabei immer von der Richtung des Funkens gebildet.

Zusätzlich (oder alternativ) zur Anordnung der Leiterplatte bzw. der empfindlichen Komponente im Schattenbereich kann ein Schutz dadurch erreicht werden, dass gegenüber elektromagnetischen Feldern empfindliche elektronische Bauteile des Rechners innerhalb einer nach Art eines Faradayschen Käfigs ausgebildeten Abschirmung angeordnet sind. Als Abschirmung ist dabei ein zumindest 0,5 mm dickes Stahlblech bevorzugt. Eine Verbesserung der Abschirmung kann durch höhere Materialstärken, und/oder besser leitfähige Materialien (Kupfer, Aluminium oder andere) erreicht werden. Dabei ist es bevorzugt, dass keine der oben genannten sensiblen Komponenten der direkten Bestrahlung ausgesetzt ist. Daher sind allenfalls nötige Kabeldurchführungen mit Vorteil so angeordnet, dass sie nicht direkt in Richtung des Funkens zeigen, insbesondere auf der abgewandten Seite angeordnet sind. Die dadurch verlängerten Kabelführungen müssen dabei bewusst in Kauf genommen werden. Einstreuungen über die Kabel können durch technisch übliche Anordnung von Erdkabeln bei Mehrleiterverbindungen minimiert werden.

Sind dennoch Öffnungen der Abschirmung auf der dem Funken zugewandten Seite nötig (sofern sich diese im kritischen - weil nicht abgeschirmten Bereich befinden), ist bevorzugt vorgesehen, dass gegenüber elektromagnetischen Feldern empfindliche elektronische Bauteile des Rechners außerhalb des Bereichs eines Kegels mit einem Öffnungswinkel von 30° angeordnet sind, dessen Achse senkrecht zur Durchbrechung verläuft und dessen Kegelerzeugenden vom Rand der Durchbrechung ausgehen. Der Öffnungswinkel 30° ergibt sich dabei wie folgt: Durch Beugung und Elektronenplasmaresonanz im leitenden Material wird die Durchbrechung in der Abschirmung selbst zu einer Quelle von elektromagnetischer Strahlung, wobei der Vektor des Dipolmoments in der Ebene der Abschirmung liegt und selbst wieder eine dipolartige Abstrahlcharakteristik mit "Funkschatten" in einem Kegel um den Vektor des Dipolmoments darstellt. Da aber der Vektor des induzierten Dipolmoments nur unzureichend abgeschätzt werden kann - dieser also im Loch beliebig orientiert ist - ergibt sich ein kegelförmiger Bereich senkrecht zur Abschirmung. Der Öffnungswinkel dieses Kegels entspricht dem Komplementärwinkel des oben angegebenen Bereichs (und würde daher bei etwa 60° (optimal kleiner als 80°) liegen. Da das entstehende Dipolmoment allerdings deutlich kleiner ist als das primäre Moment des Funkens, kann der Sicherheitswinkel reduziert werden, und ergibt sich zu etwa 30°.

Um die Störungssicherheit weiter zu erhöhen, ist bevorzugt vorgesehen, dass die Stromversorgungseinheit der Zündung und die Stromversorgungseinheit einer Leiterplatte mit gegenüber elektromagnetischen Feldern empfindlichen elektronischen Bauteilen des Rechners voneinander galvanisch getrennt sind. Die Ausbildung ist dabei mit Vorteil so getroffen, dass die galvanisch voneinander getrennten Stromversorgungseinheiten von einer gemeinsamen Netzversorgung gespeist sind.

Außerdem hat es sich als günstig herausgestellt, wenn Speichermedien des Rechners als Festkörperlaufwerke ausgebildet sind. Solche Festkörperlaufwerke verfügen über keine beweglichen Teile, wie beispielsweise Motoren oder Positionierungsmechanismen für Lesearme, welche gegenüber elektromagnetischen Feldern sehr empfindlich sind. Weiters wird verhindert, dass es zu einem Datenverlust durch ein entmagnetisiertes Transientenfeld kommt.

Um die Messgenauigkeit der Flammpunktermittlung zu erhöhen und um eine gute Reproduzierbarkeit zu erreichen, ist weiters bevorzugt vorgesehen, dass die Mittel zum Beheizen der Flüssigkeit bzw. des Feststoffes Mittel zum Beheizen des Deckels umfassen und die von unten an den Deckel anpressbare Messwanne eine Temperatur aufweist, die zwingend niedriger ist als die Temperatur des Deckels. Bevorzugt ist der beheizbare Deckel mit der elektrischen Zündung, der Druckmesseinrichtung und zwei Temperaturfühlern jeweils für den Deckel und den Inhalt der Messkammer versehen und die Messwanne zur Entleerung, Reinigung und Füllung ist vom Deckel abnehmbar angeordnet. Vorzugsweise ist die Druckmesseinrichtung in an sich bekannter Weise als piezoresistiver Druckgeber ausgebildet.

Es ist ein wesentlicher Vorteil dieser Ausbildung, dass die gemessene Druckerhöhung nicht nur von der Temperatur des verbrannten Gases sondern auch vom Volumen der Flamme abhängt. Dadurch kann durch Einstellung einer Schwelle für die Druckerhöhung die volumsmäßige Größe der Flamme erfasst werden.

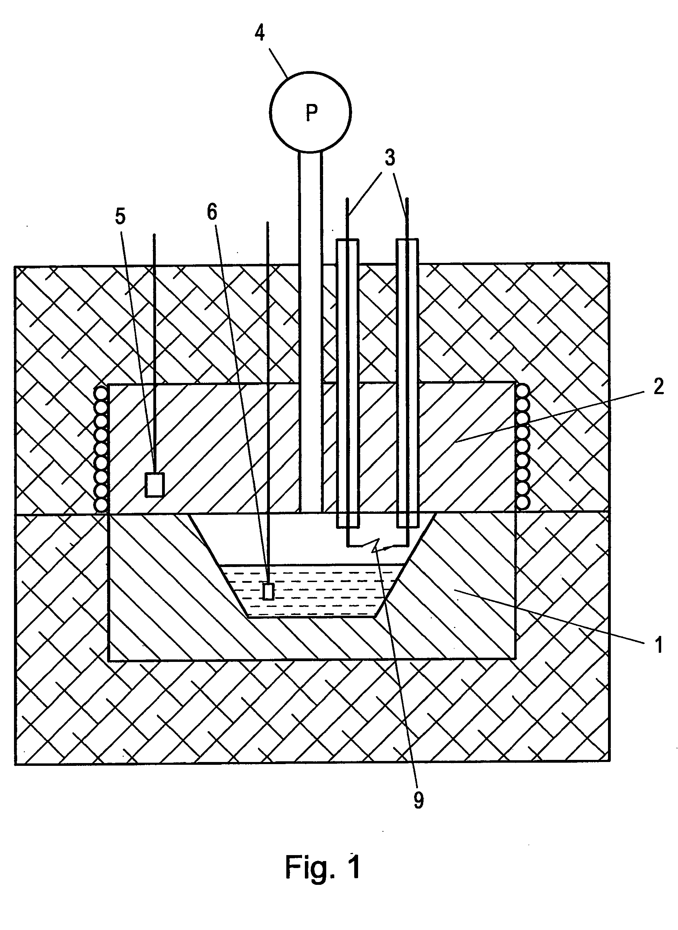

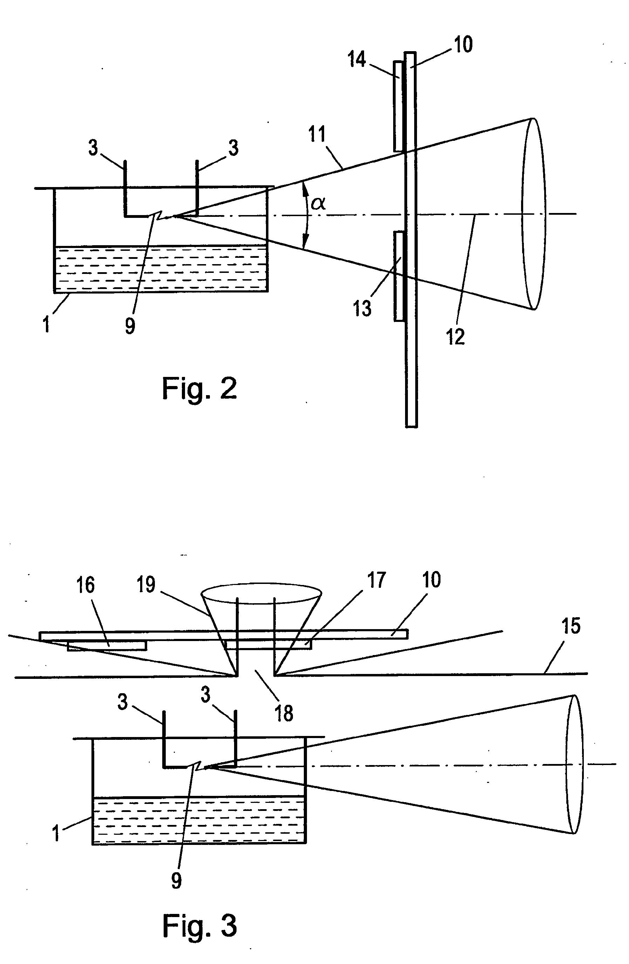

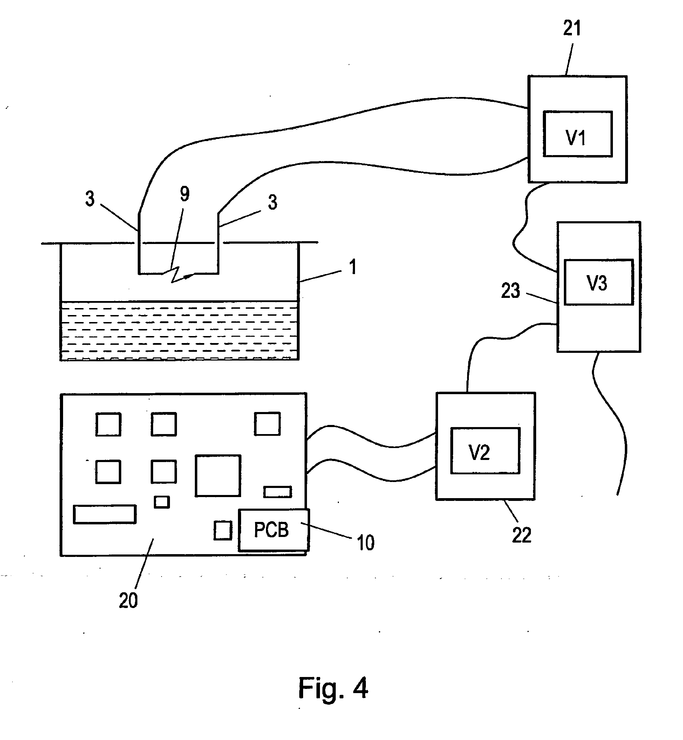

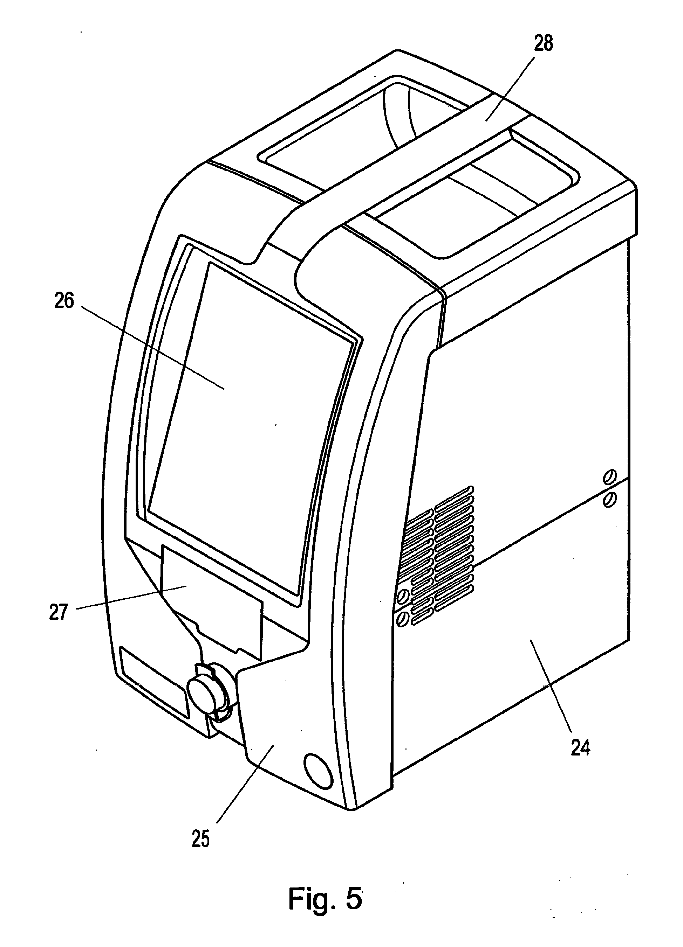

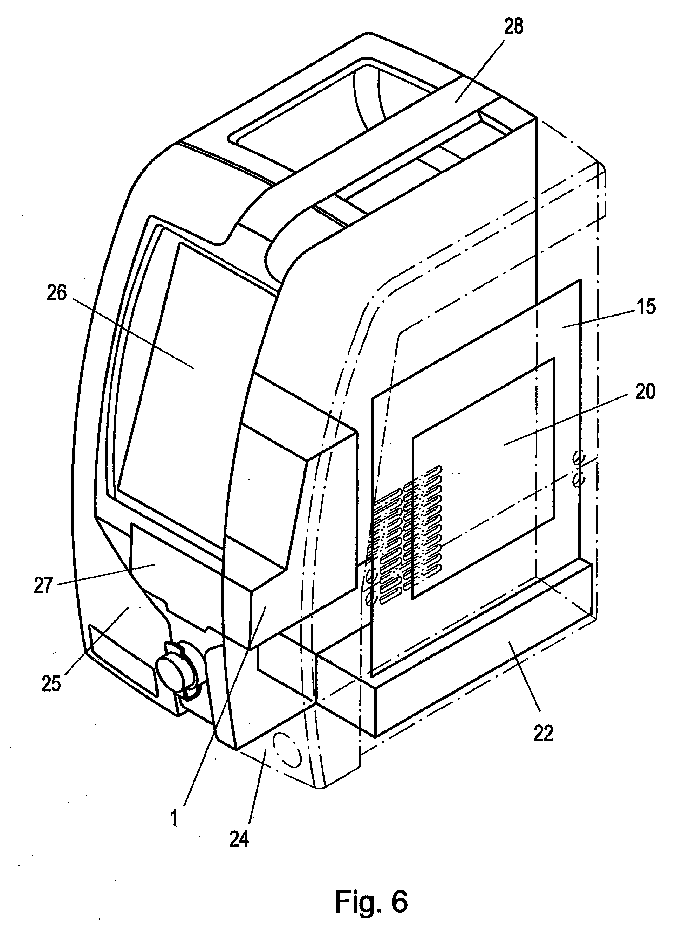

Die Erfindung wird nachfolgend anhand eines in der Zeichnung schematisch dargestellten Ausführungsbeispiels näher erläutert. In dieser zeigen Fig. 1 schematisch einen Ausschnitt der erfindungsgemäßen Vorrichtung im Bereich der Messkammer, Fig. 2 schematisch die Position einer Leiterplatte des eingebetteten Rechners relativ zur Zündquelle, Fig. 3 die Anordnung einer Abschirmung zwischen der Zündquelle und einer Leiterplatte des eingebetteten Rechners, Fig. 4 eine schematische Ansicht der Stromversorgung für die Zündquelle und das eingebettete System, Fig. 5 eine Außenansicht des Gehäuses und Fig. 6 eine Ansicht gemäß Fig. 5 mit teilweise aufgebrochen dargestelltem Gehäuse.

In Fig. 1 ist eine Messwanne 1 sowie ein Deckel 2 dargestellt, welche zwecks guter Wärmeleitung aus Aluminium gefertigt sind. Die Temperaturmessung und Regelung erfolgt über einen mit dem Deckel thermisch gut gekoppelten Temperaturfühler 5. Am elektrisch beheizten Deckel 2, welcher fest im Gerät thermisch isoliert eingebaut ist, befinden sich zwei Elektroden 3 für die elektrische Zündung. Die Zündspitzen der Elektroden befinden sich ca. 2 mm über der Oberfläche der zu messenden Substanz. Der Zündfunke wird mit einer handelsüblichen Zündspule elektrisch erzeugt. Weiters ist im Deckel 2 ein zweiter Temperaturfühler 6, welcher direkt in die Messsubstanz ragt, eingebaut. Damit wird die Temperatur der Messsubstanz genau erfasst und gilt dann als Messwert für den Flammpunkt.

Hauptgegenstand der Messeinrichtung ist die Erfassung des Flammpunktes. Es wird davon ausgegangen, dass jede Verbrennung mit einer Temperaturerhöhung verbunden ist. Im Gegensatz zur herkömmlich angewendeten Temperaturmessung wird die Druckerhöhung infolge der Verbrennungstemperatur innerhalb der Messkammer herangezogen. Wird eine Verbrennungstemperatur von ca. 1000° C angenommen, so erhöht sich der Druck bei gleichem Volumen nach der Gasgleichung.

$$p \times v \ / \ T = const$$

$$p2 \ / \ p1 = T2 \ / \ T1$$

p2 Druck bei 1000° C
p1 Druck bei Messtemperatur (101,3 kPa)
T2 Absolute Verbrennungstemperatur (1000 + 273)
T1 Absolute Messtemperatur (tm + 273)

Bei einer Messtemperatur vom 100° C entspricht das einer Druckerhöhung auf ca. 350,0 kPa.

Das vorgegebene Volumen an verbranntem Gas mit hohem Druck verteilt sich auf das gesamte Gasvolumen in der Messkammer. Daraus kann der eigentliche Druckanstieg in der Kammer ermittelt werden. Eine Korrektur des erforderlichen Druckanstieges über die Messtemperatur ist einfach möglich und für genaue Bestimmungen auch erforderlich.

Unter der Annahme, dass die Flamme 20% des freien Gasvolumens einnimmt, ergibt sich eine endgültige Druckerhöhung von ca. 50 kPa. Dies ist eine Messgröße, welche mit großer Genauigkeit gemessen werden kann.

Zur genauen Erfassung des Druckanstieges wird vorzugsweise eine als piezoresistiver Druckgeber ausgebildete Druckmesseinrichtung 4 verwendet, welche über eine Schlauchleitung mit der Messkammer verbunden ist.

In Fig. 2 ist eine Messwanne wiederum mit 1 bezeichnet und die zwischen den beiden Elektroden 3 ausgebildete Funkstrecke ist mit 9 bezeichnet. Weiters ist eine Leiterplatte 10 des eingebetteten Rechners dargestellt, dessen Flächennormale parallel zur Funkenstrecke 9 verläuft. Um gegenüber elektromagnetischen Feldern besonders empfindliche elektronische Komponenten der Leiterplatte 10 zu schützen, können diese beispielsweise innerhalb des mit 11 bezeichneten Kegels angeordnet sein. Der Kegel weist im vorliegenden Fall einen Öffnungswinkel α von 30° auf und weist eine in der Verlängerung der Funkenstrecke 9 liegende Achse 12 auf. Die von der Zündquelle ausgehende elektromagnetische Belastung ist innerhalb des Bereichs des Kegels 11 schwächer als außerhalb dieses Kegels, sodass ein innerhalb dieses Bereichs angeordneter elektronischer Bauteil 13 entsprechend besser geschützt ist als ein außerhalb dieses Bereichs angeordneter elektronischer Bauteil 14.

In Fig. 3 ist eine abgewandelte Ausbildung dargestellt, bei welcher die Leiterplatte 10 parallel zur Funkenstrecke 9 angeordnet ist. Weiters ist eine nach Art eines Faradayschen Käfigs ausgebildete Abschirmung 15 dargestellt, sodass die elektronischen Komponenten 16 und 17 grundsätzlich abgeschirmt sind. Wenn allerdings in der Abschirmung 15 eine Durchbrechung 18 angeordnet werden muss, etwa um eine Kabeldurchführung zu ermöglichen, ist bevorzugt, dass besonders empfindliche elektronische Komponenten außerhalb des mit 19 bezeichneten Kegels angeordnet sind.

In Fig. 4 ist wiederum die Messkammer mit 1 bezeichnet, und es ist weiters ein eingebettetes System schematisch mit 20 bezeichnet. Eine Leiterplatte des eingebetteten Systems 20 ist schematisch mit 10 bezeichnet. Die Versorgung der Funkenstrecke 9 erfolgt dabei über ein Netzgerät 21. Die Versorgung der CPU der Leiterplatte 10 erfolgt über ein weiteres Netzgerät 22. Weniger sensible Leiterplatten des eingebetteten Systems können dabei durchaus auch an das Netzgerät 21 angeschlossen sein. Die Netzgeräte 21 und 22 sind voneinander galvanisch getrennt und über die Einheit 23 auf eine gemeinsame Netzversorgung zusammengeführt.

Fig. 5 zeigt das Gehäuse 24 mit einer Frontblende 25, die alle erforderlichen Bedienelemente aufweist. Insbesondere ist eine berührungsempfindliche Anzeigevorrichtung 26 sowie ein verschließbarer Zugang 27 zum Einführen bzw. Befüllen der Messwanne vorgesehen. Um den Transport zu erleichtern, ist weiters ein Tragegriff 28 angeordnet.

In der Darstellung gemäß Fig. 6 ist die Anordnung der Messkammer 1 im Inneren Des Gehäuses 24 ersichtlich. Das eingebettete System 20 erstreckt sich im wesentlichen in einer vertikalen Ebene und ist mit Hilfe einer Abschirmung 15 abgeschirmt. Die Spannungsversorgung für das eingebettete System 20 ist mit 22 bezeichnet.

**Patentansprüche**

1. Vorrichtung zur Messung des Flammpunktes von Flüssigkeiten und Feststoffen in einer Messkammer, welche aus einer Masswanne (1) sowie einem Deckel (2) gebildet ist und welche mit Mitteln zum Beheizen der Flüssigkeit und/oder des Feststoffes in der Messwanne (1), einer eine Funkenstrecke (9) aufweisenden elektrischen Zündung, Temperaturfühler (5, 6), einer Druckmesseinrichtung (4) sowie einer Anpresseinrichtung zur dichten Verbindung von Messwanne (1) und Deckel (2) versehen ist, wobei weiters eine Steuervorrichtung zum Steuern der Heizmittel, der Zündung und der Anpressvorrichtung und zum Erfassen der Messwerte der Temperaturfühler (5, 6) und der Druckmesseinrichtung (4) vorgesehen ist, **dadurch gekennzeichnet, dass** die Steuervorrichtung von einem als eingebettetes System (20) ausgebildeten Rechner, insbesondere einem Embedded PC gebildet ist, der über eine Schnittstellenvorrichtung an die Heizmittel, die Zündung, die Anpressvorrichtung, die Temperaturfühler (5, 6) und die Druckmesseinrichtung (4) angeschlossen ist, und dass die Messkammer (1) und die Steuervorrichtung in einem gemeinsamen Gehäuse (24) angeordnet sind, und dass gegenüber elektromagnetischen Feldern empfindliche elektronische Bauteile (13) des Rechners (20) innerhalb eines vor elektromagnetischen Feldern geschützten oder abgeschirmten Bereichs (11) und andere Bauteile (14) des Rechners (20) außerhalb des geschützten oder abgeschirmten Bereichs (11) angeordnet sind.

2. Vorrichtung nach Anspruch 1, **dadurch gekennzeichnet, dass** der Rechner mit Hilfe einer berührungsempfindlichen Anzeigevorrichtung (26), insbesondere Bildschirm bedienbar ist.

3. Vorrichtung nach Anspruch 2, **dadurch gekenn-**

**zeichnet, dass** die elektrische Verbindung der Anzeigevorrichtung (26) mit dem Rechner als analoge Verbindung ausgebildet ist.

4. Vorrichtung nach Anspruch 1, 2 oder 3, **dadurch gekennzeichnet, dass** gegenüber elektromagnetischen Feldern empfindliche elektronische Bauteile (13, 14) des Rechners innerhalb eines durch einen unteren und eines oberen Öffnungswinkel begrenzten Bereichs eines Kegels (11) liegen, dessen Achse (12) in der Verlängerung der Funkenstrecke (9) liegt.

5. Vorrichtung nach Anspruch 4, **dadurch gekennzeichnet, dass** der untere Öffnungswinkel 0° und der obere Öffnungswinkel 40°, bevorzugt 20° beträgt.

6. Vorrichtung nach Anspruch 4, **dadurch gekennzeichnet, dass** der untere Öffnungswinkel 70°, bevorzugt 84°, und der obere Öffnungswinkel 90° beträgt.

7. Vorrichtung nach einem der Ansprüche 4 bis 6, **dadurch gekennzeichnet, dass** die Ebene der die empfindlichen Bauteile (13, 14) tragenden Leiterplatte (10) des Rechners in einem Winkel von im Wesentlichen 90° zur Funkenstrecke (9) angeordnet ist.

8. Vorrichtung nach einem der Ansprüche 4 bis 7, **dadurch gekennzeichnet, dass** die empfindlichen Bauteile (13, 14, 16, 17) eine CPU, einen Analog-Digital-Wandler und/oder einen Operationsverstärker umfassen.

9. Vorrichtung nach einem der Ansprüche 1 bis 8, **dadurch gekennzeichnet, dass** gegenüber elektromagnetischen Feldern empfindliche elektronische Bauteile (16, 17) des Rechners innerhalb einer nach Art eines Faradayschen Käfigs ausgebildeten Abschirmung (15) angeordnet sind.

10. Vorrichtung nach Anspruch 9, **dadurch gekennzeichnet, dass** eine für eine Kabeldurchführung vorgesehene Durchbrechung (18) in der Abschirmung (15) an der der Zündung abgewandten Seite der Abschirmung (15) vorgesehen ist.

11. Vorrichtung nach Anspruch 9 oder 10, **dadurch gekennzeichnet, dass** bei einer an der der Zündung zugewandten Seite der Abschirmung (15) vorgesehenen Durchbrechung (18) in der Abschirmung (15) gegenüber elektromagnetischen Feldern empfindliche elektronische Bauteile (16, 17) des Rechners außerhalb des Bereichs eines Kegels (19) mit einem Öffnungswinkel von 30° angeordnet sind, dessen Achse senkrecht zur Durchbrechung (18) verläuft und dessen Kegelerzeugenden vom Rand der Durchbrechung (18) ausgehen.

12. Vorrichtung nach einem der Ansprüche 1 bis 11, dadurch gekennzeichet, dass die Stromversorgungseinheit (21) der zündung und die Stromversorgungseinheit (22) einer Leiterplatte (10) mit gegenüber elektromagnetischen Feldern empfindlichen elektronischen Bauteilen (13, 14, 16, 17) des Rechners voneinander galvanisch getrennt sind.

13. Vorrichtung nach Anspruch 12, **dadurch gekennzeichnet, dass** die galvanisch voneinander getrennten Stromversorgungseinheiten (21, 22) von einer gemeinsamen Netzversorgung (23) gespeist sind.

14. Vorrichtung nach einem der Ansprüche 1 bis 13, **dadurch gekennzeichnet, dass** Speichermedien des Rechners als Festköperlaufwerke ausgebildet sind.

15. Vorrichtung nach einem der Ansprüche 1 bis 14, **dadurch gekennzeichnet, dass** die Mittel zum Beheizen der Flüssigkeit bzw. des Feststoffes Mittel zum Beheizen des Deckels (2) umfassen und die von unten an den Deckel (2) anpressbare Messwanne eine Temperatur aufweist, die zwingend niedriger ist als die Temperatur des Deckels (2).

16. Vorrichtung nach Anspruch 15, **dadurch gekennzeichnet, dass** der beheizbare Deckel (2) mit der elektrischen zündung, der Druckmesseinrichtung und zwei Temperaturfühlern (5, 6) jeweils für den Deckel (2) und den Inhalt der Messkammer (1) versehen ist und das die Messwanne zur Entleerung, Reinigung und Füllung vom Deckel (2) abnehmbar angeordnet ist.

17. vorrichtung nach einem der Ansprüche 1 bis 16, **dadurch gekennzeichnet, dass** die Druckmesseinrichtung (4) als piezoresistiver Druckgeber ausgebildet ist.

**Claims**

1. A device for measuring the flash point of liquids and solids in a measurement chamber, which is formed by a measurement basin (1) and a lid (2) and which is provided with means for heating the liquid and/or the solid in the measurement basin (1), an electrical igniter (9) having a spark gap, temperature sensors (5, 6), a pressure measuring apparatus (4) and a presson device for tightly connecting the measurement basin (1) and the lid (2), a control device also being provided in order to control the heating means, the igniter and the press-on device and to collect the measured values of the temperature sensors (5, 6) and of the pressure measuring apparatus (4), **characterised in that** the control device is formed by a computer designed as an embedded system (20), in particular an embedded PC, which is connected to the heating means, the igniter, the press-on device, the temperature sensors (5, 6) and the pressure measuring apparatus (4) by means of an interface device, and that the measurement chamber (1) and the control device are arranged in a common housing (24), and that electronic components (13) of the computer (20) sensitive to electromagnetic fields lie inside a region (11), which is protected or shielded from electromagnetic fields and other components (14) of the computer (20) are arranged outside of the protected of shielded region (11).

2. Device according to claim 1, **characterised in that** the computer can be operated with the aid of a touch-sensitive display device (26), in particular a display screen.

3. Device according to claim 2, **characterised in that** the electrical connection of the display device (26) to the computer is constituted as an analog connection.

4. Device according to claim 1, 2 or 3, **characterised in that** electronic components (13, 14) of the computer sensitive to electromagnetic fields lie inside a region of a cone (11) defined by a lower and an upper opening angle, the axis (12) of said cone lying in the extension of the spark gap (9).

5. Device according to claim 4, **characterised in that** the lower opening angle amounts to 0° and the upper opening angle amounts to 40°, preferably 20°.

6. Device according to claim 4, **characterised in that** the lower opening angle amounts to 70°, preferably 84°, and the upper opening angle amounts to 90°.

7. Device according to any one of claims 4 to 6, **characterised in that** the plane of the printed circuit board (10) of the computer carrying the sensitive components (13, 14) is arranged at an angle of essentially 90° to the spark gap (9).

8. Device according to any one of claims 4 to 7, **characterised in that** the sensitive components (13, 14, 16, 17) comprise a CPU, an analog-to-digital converter and/or an operational amplifier.

9. Device according to any one of claims 1 to 8, **characterised in that** electronic components (16, 17) of the computer sensitive to electromagnetic fields are arranged inside a shield (15) constituted in the manner of a Faraday cage.

10. Device according to claim 9, **characterised in that** a perforation (18) in the shield (15) provided for a cable lead-through is provided on the side of the shield (15) facing away from the igniter.

11. Device according to claim 9 or 10, **characterised in that**, in the case of a perforation (18) provided on the side of the shield (15) facing the igniter, electronic components (16, 17) of the computer sensitive to electromagnetic fields are arranged outside the region of a cone (19) with an opening angle of 30°, whose axis runs normal to the perforation (18) and whose cone generatrices proceed from the edge of the perforation (18).

12. Device according to any one of claims 1 to 11, **characterised in that** the current supply unit (21) of the igniter and the current supply unit (22) of a printed circuit board (10) with the electronic components (13, 14, 16, 17) of the computer sensitive to electromagnetic fields are galvanically separated from one another.

13. Device according to claim 12, **characterised in that** the current supply units (21, 22) galvanically separated from one another are supplied from a common mains supply (23).

14. Device according to any one of claims 1 to 13, **characterised in that** storage media of the computer are constituted as solid-state drives.

15. Device according to any one of claims 1 to 14, **characterised in that** the means for heating the liquid or the solid comprise means for heating the lid (2) and the measurement basin which can be pressed onto the lid (2) from beneath has a temperature which is necessarily lower than the temperature of the lid (2).

16. Device according to claim 15, **characterised in that** the heatable lid (2) is provided with the electrical igniter, the pressure measuring apparatus and two temperatures sensors (5, 6) respectively for the lid (2) and the contents of the measurement chamber (1) and the measurement basin is arranged so that it can be removed from the lid (2) for emptying, cleaning and filling.

17. Device according to any one of claims 1 to 16, **characterised in that** the pressure measuring apparatus (4) is constituted as a piezoresistive pressure sensor.

## Revendications

1. Dispositif permettant de mesurer le point d'inflammation de liquides et solides dans une chambre de mesure constituée par une cuve de mesure (1) et un couvercle (2) et équipée de moyens destinés à chauffer le liquide et/ou le solide dans la cuve de mesure (1), d'un allumage électrique comportant une distance de décharge (9), de capteurs de température (5, 6), d'un dispositif de mesure de la pression (4) et d'un dispositif de serrage pour un assemblage étanche entre la cuve de mesure (1) et le couvercle (2), dans lequel dispositif il est prévu également un dispositif de commande destiné à commander les moyens de chauffage, l'allumage et le dispositif de serrage et destiné à enregistrer les valeurs de mesure des capteurs de température (5, 6) et du dispositif de mesure de la pression (4), **caractérisé en ce que** le dispositif de commande est constitué par un ordinateur configuré sous la forme d'un système informatique (20) incorporé, en particulier un ordinateur intégré, qui est raccordé via un dispositif à interfaces aux moyens de chauffage, à l'allumage, au dispositif de serrage, aux capteurs de température (5, 6) et au dispositif de mesure de la pression (4), et **en ce que** la chambre de mesure (1) et le dispositif de commande sont disposés dans un carter (24) commun, et **en ce que** des composants électroniques (13) de l'ordinateur (20), sensibles aux champs électromagnétiques, sont disposés à l'intérieur d'une zone (11) protégée ou blindée face aux champs électromagnétiques, et d'autres composants (14) de l'ordinateur (20) sont disposés à l'extérieur de la zone (11) protégée ou blindée,

2. Dispositif selon la revendication 1, **caractérisé en ce que** l'ordinateur pleut être contrôlé au moyen d'un dispositif d'affichage (26) à effleurement, en particulier un écran.

3. Dispositif selon la revendication 2, **caractérisé en ce que** la liaison électrique entre le dispositif d'affichage (26) et l'ordinateur est réalisée sous la forme d'une liaison analogique.

4. Dispositif selon la revendication 1, 2 ou 3, **caractérisé en ce que** les composants électroniques (13, 14) de l'ordinateur, sensibles aux champs électromagnétiques, sont situés à l'intérieur d'une zone d'un cône (11), qui est délimité par un angle d'ouverture inférieur et un angle d'ouverture supérieur et dont l'axe (12) est situé dans le prolongement de la distance de décharge (9).

5. Dispositif selon la revendication 4, **caractérisé en ce que** l'angle d'ouverture inférieur mesure 0° et l'angle d'ouverture supérieur mesure 40°, de préférence 20°.

6. Dispositif selon la revendication 4, **caractérisé en ce que** l'angle d'ouverture inférieur mesure 70°, de préférence 84°, et l'angle d'ouverture supérieur mesure 90°.

7. Dispositif selon l'une quelconque des revendications 4 à 6, **caractérisé en ce que** le plan de la plaquette de circuits imprimés (10) de l'ordinateur, laquelle porte les composants (13, 14) sensibles, est disposée en formant un angle de sensiblement essentiellement 90° par rapport à la distance de décharge (9).

8. Dispositif selon l'une quelconque des revendications 4 à 7, **caractérisé en ce que** les composants (13, 14, 16, 17) sensibles englobent une unité centrale de traitement, un convertisseur analogique-numérique et/ou un amplificateur opérationnel.

9. Dispositif selon l'une quelconque des revendications 1 à 8, **caractérisé en ce que** les composants électroniques (16, 17) de l'ordinateur, sensibles aux champs électromagnétiques, sont disposés à l'intérieur d'un blindage (15) configuré à la manière d'une cage de Faraday.

10. Dispositif selon la revendication 9, **caractérisé en ce qu'**une percée (18) dans le blindage (15), prévue pour le passage d'un câble, est prévue sur le côté du blindage (15), détourné de l'allumage.

11. Dispositif selon la revendication 9 ou 10, **caractérisé en ce qu'**en présence d'une percée (18) dans le blindage (15) prévue sur le côté du blindage (15) orienté vers l'allumage, des composants électroniques (16, 17) de l'ordinateur, sensibles aux champs électromagnétiques, sont disposés à l'extérieur de la zone d'un cône (19) avec un angle d'ouverture de 30°, dont l'axe est perpendiculaire à la percée (18) et dont les génératrices du cône partent du bord de la percée (18).

12. Dispositif selon l'une quelconque des revendications 1 à 11, **caractérisé en ce que** l'unité de fourniture du courant (21) de l'allumage et l'unité de fourniture du courant (22) d'une plaquette de circuits imprimés (10) sont séparées l'une de l'autre par voie galvanique par les composants électroniques (13, 14, 16, 17) de l'ordinateur, sensibles aux champs électromagnétiques.

13. Dispositif selon la revendication 12, **caractérisé en ce que** les unités de fourniture du courant (21, 22), séparées l'une de l'autre par voie galvanique, sont alimentées par une alimentation réseau (23) commune.

14. Dispositif selon l'une quelconque des revendications 1 à 13, **caractérisé en ce que** les supports de mémoire de l'ordinateur sont réalisés sous forme de disques électroniques SSD.

15. Dispositif selon l'une quelconque des revendications 1 à 14, **caractérisé en ce que** les moyens destinés à chauffer le liquide ou le solide comportent des moyens destinés à chauffer le couvercle (2), et la cuve de mesure, propre à être serrée par le bas contre le couvercle (2), présente une température qui est nécessairement inférieure à la température du couvercle (2).

16. Dispositif selon la revendication 15, **caractérisé en ce que** le couvercle (2) chauffable est muni de l'allumage électrique, du dispositif de mesure de la pression et de deux capteurs de température (5, 6) respectivement pour le couvercle (2) et le contenu de la chambre de mesure (1), et **en ce que** la cuve de mesure est montée de manière à pouvoir être détachée du couvercle (2) en vue du vidage, du nettoyage et du remplissage.

17. Dispositif selon l'une quelconque des revendications 1 à 16, **caractérisé en ce que** le dispositif de mesure de la pression (4) est réalisé sous la forme d'un capteur de pression piézorésistif.

Fig. 1

Fig. 2

Fig. 3

Fig. 4

Fig. 5

EP 2 569 617 B1

Fig. 6

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

* EP 486980 B1